# EUROPEAN PATENT SPECIFICATION

(11) **EP 4 575 281 B1**
(45) Date of publication and mention of the grant of the patent: **01.07.2026**
(21) Application number: 24218977.7
(22) Date of filing: 11.12.2024
(51) Int. Cl.: F16K 15/02, F16K 15/06, B08B 3/02, F04B 53/10, F04B 49/035, F16K 11/10, F16K 17/06

(54) **VALVE ASSEMBLY FOR PUMPS**
VENTILBAUGRUPPE FÜR PUMPEN
ENSEMBLE DE VANNES POUR POMPES

(30) Priority: 18.12.2023 IT 202300026946
(43) Date of publication of application: 25.06.2025
(73) Proprietor: Annovi Reverberi S.p.A., 41122 Modena (IT)
(72) Inventor: RINIERI, Alessio, 41037 MIRANDOLA (MO) (IT)
(74) Representative: AVERA-IP SRL

(56) References cited:
- EP-B1- 1 854 558
- EP-B1- 2 299 150
- DE-A1- 4 407 974
- US-A1- 2009 317 262

## Description

### TECHNICAL FIELD

The present invention concerns a valve assembly for pumps, for example for piston or plunger positive displacement pumps that can be installed on pressure washers or other machines for distributing and/or dispensing pressurized fluids (typically water).

### PRIOR ART

As is known, pumps, particularly piston or plunger positive displacement pumps, are generally provided with an intake manifold connected to a tank of the fluid to be pumped, and with a delivery manifold adapted to be connected to a fluid dispensing device, for example generally in the form of a dispensing lance or gun.

Between the delivery manifold and the dispensing device, these pumps comprise a regulating valve assembly, which is fluidly interposed between the delivery manifold and the dispensing device, in order to regulate the delivery pressure.

Various examples of valve or valve assemblies for use in fluidic conveying are described in documents EP2299150 B1, EP1854558 B1, US2009317262 A1, DE4407974 A1. Conventionally, said regulating valve assembly is fluidly connected by means of an inlet duct to the delivery manifold, and fluidly connected by means of an outlet duct to a dispensing device.

The control valve assembly comprises, as is known, a first chamber communicating with the inlet duct and a second chamber communicating with the first chamber and with the outlet duct.

The valve assembly also comprises a coupling sleeve provided with a central cavity, which is interposed between the second chamber and the outlet duct to place them in fluid communication.

In the second chamber there is housed a first shutter body which, pushed by a spring, is normally adapted to cooperate with a first valve seat to close the communication between the first chamber and the second chamber.

This spring, in particular, is compressed between said coupling sleeve and the first shutter body itself.

As is known, on the first shutter body one or more passage ducts are made which make available, when this is in the open position, a path for the fluid from the second chamber to the outlet duct.

Therefore, during the fluid dispensing step, while the fluid is flowing from the first chamber towards the outlet duct when the first shutter body is in the open position, the fluid first enters the second chamber and then suddenly makes a sharp bend, substantially at right angles, so as to cross one of said passage ducts made in the first shutter body, make a further sharp bend, substantially at right angles, so as to reach and subsequently cross the housing seat of the spring also flowing in contact with it and then flow into the central cavity of the coupling sleeve and then reach the outlet duct.

A drawback known in the sector is that due to the aforementioned conformation of the path and also due to the turns of the spring that lap the fluid, unwanted pressure drops are present and many turbulences arise which negatively affect the dispensing of the fluid.

In light of the foregoing, an object of the present invention is to overcome this drawback of the prior art.

It is a further object of the present invention to achieve the aforementioned object within the scope of a simple, rational and affordable solution.

These and other objects are achieved by the features of the invention set out in the independent claims.

The dependent claims outline preferred and/or particularly advantageous aspects of the invention.

### DISCLOSURE OF THE INVENTION

In particular, the invention makes available a valve assembly for pumps comprising:
- a first chamber adapted to be placed in fluid communication with an inlet duct (in particular through which it receives the fluid, for example a liquid),
- a second chamber communicating with the first chamber via a first valve seat, the second chamber being adapted to be placed in fluid communication with an outlet duct (for example for dispensing of the fluid, i.e. the liquid),
- a first shutter body housed in the second chamber and movable between a closed position, in which it closes the first valve seat, and an open position, in which it opens the first valve seat,
- a first resilient element adapted to push the first shutter body towards the closed position (in particular in contrast to the pressure present in the first chamber),
- a coupling sleeve provided with a sleeve closed onto itself in a (i.e. annular) loop around a central axis and delimiting an internal cavity extending along said central axis, wherein the coupling sleeve is adapted to place the second chamber in fluid communication with the outlet duct, said first resilient element being compressed between the coupling sleeve and the first shutter body;
characterised in that the coupling sleeve comprises at least one passage duct passing through the (annular, i.e. closed onto itself in a loop,) sleeve in a transverse direction with respect to the central axis thereof and flowing into the internal cavity to place the second chamber in communication with the internal cavity to place the second chamber in fluidic communication with the outlet duct.

Thanks to this solution, the valve assembly makes available a path for the fluid flowing from the second chamber towards the outlet duct in which the changes in direction are less sudden, thus allowing to reduce pressure losses and in general allowing to improve the efficiency of the pump to which the valve assembly is associated.

Furthermore, said at least one passage duct of the valve assembly makes available a path for the fluid from the second chamber towards the outlet duct that does not affect the first resilient element (for example a compression spring), i.e. that does not provide for the fluid to flow in contact with the first resilient element, thereby avoiding the formation of turbulences.

Another aspect of the invention provides that each passage duct may flow at one end into the second chamber and at the opposite end into the internal cavity of the coupling sleeve. In practice, according to the invention it is possible to provide that each passage duct can have an open end on the second chamber and an opposite open end on the internal cavity of the coupling sleeve.

Another aspect of the invention provides that the coupling sleeve can comprise a plurality of passage ducts which can be uniformly distributed along the ring-shaped (i.e. annular) extent of the (annular) sleeve.

Moreover, another aspect of the invention provides that the coupling sleeve may have at least three distinct passage ducts each of which passes through the sleeve (annular, i.e. closed onto itself in a loop) in a transverse direction with respect to the central axis thereof and flowing into the internal cavity.

Another aspect of the invention provides that the valve assembly can comprise a valve body within which the first chamber and the second chamber are (at least) defined, and that the coupling sleeve can be rigidly fixed to said valve body.

A further aspect of the invention provides that the coupling sleeve can be rigidly fixed (for example screwed) to the valve body at the second chamber, and that the coupling sleeve can have a first portion that extends inside the second chamber, and a second portion that (for example closes the second chamber and) protrudes (at least partially) outside the valve body, to which second portion the outlet duct is adapted to be fluidly connected sealingly.

Thanks to this solution, the connection of the outlet duct to the coupling sleeve is particularly easy.

Another aspect of the invention provides that the first shutter body may be devoid of passage ducts adapted to place the second chamber in fluid communication with the outlet duct (i.e. devoid of passage ducts that open directly onto the second chamber).

Thanks to this solution, the fluid flowing from the second chamber towards the outlet duct does not pass through the shutter body and therefore the sudden changes in the direction of the fluid to pass through the shutter body itself are eliminated.

Yet another aspect of the invention provides that said coupling sleeve can have a plurality of passage ducts each of which is adapted to place the second chamber in fluid communication (with the internal cavity of the coupling sleeve and therefore) in fluid communication with the outlet duct.

Thanks to this solution, the coupling sleeve is particularly effective in placing the second chamber in communication with the outlet duct for the dispensing of the fluid.

A further aspect of the invention provides that the internal cavity of the coupling sleeve can have along the central axis thereof a first section proximal to the second chamber, within which the first resilient element is partially inserted, a second section distal from the second chamber (which second section can be adapted to be fluidly connected, for example directly, to said outlet duct) and an intermediate section between the first section and the second section having a smaller cross-sectional area than the cross-sectional area of the second section.

In particular, according to the invention it is possible to provide that each passage duct can open onto the internal cavity of the coupling sleeve at the second section.

Thanks to this solution, the path of the fluid from the second chamber towards the outlet duct is particularly smooth, i.e. the changes in direction are particularly gradual, thus minimising pressure drops.

Furthermore, according to the invention, the fluid that reaches the outlet duct from the second chamber to be dispensed does not pass through the first resilient element (i.e. the spring), thus obviating the turbulences that would otherwise be caused by crossing it. Another aspect of the invention provides that the first section of the internal cavity of the coupling sleeve may have a cross-sectional area smaller (with respect to a section plane orthogonal to the central axis) than the cross-sectional area of the second section (with respect to a section plane orthogonal to the central axis), for example optionally it may have a cross-sectional area comprised between 0.4 times and 0.6 times the cross-sectional area of the second section, for example optionally it may have a cross-sectional area equal to about half the cross-sectional area of the second section.

Yet another aspect of the invention provides that the coupling sleeve can have an axial narrowing which delimits said intermediate section of the internal cavity and which makes available an abutment surface for said first resilient element.

Thanks to this solution, the architecture of the valve assembly is particularly rational.

Another aspect of the invention provides that said passage duct may have a central axis inclined with respect to the central axis of the coupling sleeve by an angle of less than or equal to 45°, for example preferably inclined with respect to said central axis of the coupling sleeve by an angle of less than 40°, for example preferably inclined with respect to said central axis of the coupling sleeve by an angle substantially equal to 35° (or possibly less).

Thanks to this solution, the path of the fluid from the second chamber towards the outlet duct through the coupling sleeve is devoid of sharp bends, particularly devoid of 90° bends, but provides only limited changes in direction that allow pressure drops to be minimised.

Yet another aspect of the invention provides that said first resilient element can be at least partially inserted into the internal cavity of the coupling sleeve.

A further aspect of the invention provides that the cross-sectional area (with respect to a plane orthogonal to the central axis) of said second section of the internal cavity of the coupling sleeve can be equal to 5 to 10 times the cross-sectional area defined by the intermediate section (with respect to a plane orthogonal to the central axis), for example preferably equal to 7 to 8 times said cross-sectional area of the intermediate section. Thanks to this solution, the relationship between the cross-sectional areas of the intermediate section and the second section is such as to slow down the closure, i.e. such as to prevent a sudden closure, of the first shutter body when the dispensing of the fluid is suddenly terminated, for example particularly by closing a dispensing device, generally a gun or lance, connected to the outlet duct.

In other words, thanks to this solution it is possible to cancel or at least reduce the so-called in the technical jargon of the sector water hammer due to the closure of the dispensing device (i.e. the lance or gun).

Still, a further aspect of the invention provides that said passage duct (for example each passage duct) can have a cross-sectional area equal to 2 to 3 times the cross-sectional area of the intermediate section of the internal cavity of the coupling sleeve.

Another aspect of the invention provides that the first shutter body can be fitted onto the coupling sleeve (i.e. on said annular sleeve thereof, i.e. arranged to circumferentially embrace the coupling sleeve) and movable along the same between the open and the closed position.

Thanks to this solution, the movement of the first shutter body is guided by the coupling sleeve.

In this way, improper positionings of the first shutter body, which could render it ineffective and compromise the operation of the valve assembly can be avoided.

Another aspect of the invention provides that the valve assembly can further comprise:
- a discharge duct communicating with the first chamber via a second valve seat,
- a third chamber defined in the valve body communicating with the second chamber and partially delimited by a sliding plunger inserted into the valve body,
- a second shutter body rigidly connected to the plunger and housed in the first chamber where it is movable between a closed position, in which it closes the second valve seat, and an open position, in which it opens the second valve seat, and
- a second resilient element adapted to push the second shutter body towards the closed position in contrast to the pressure present in the third chamber.

Thanks to this solution, as long as the pressure in the third chamber is not able to overcome the force exerted on the plunger by the second resilient element, the second shutter body remains in the closed position.

If, however, the flow rate of pumped fluid increases and/or if the dispensing device is closed, the pressure in the second chamber and in the third chamber increases, increasing the thrust exerted on the plunger in contrast to the second resilient element.

When this pressure exceeds a critical value, which can be regulated by regulating the pre-load of the second resilient element, the second shutter body moves away from the second valve seat, opening a direct communication between the first chamber and the discharge duct.

In this way, all the fluid pumped by the pump, or at least the flow rate of excess fluid, flows through the discharge duct, for example towards the intake manifold, thereby ensuring that the pressure of the fluid at the outlet of the valve assembly never exceeds the critical value.

Another aspect of the invention provides that the third chamber can be in fluidic communication with the second chamber by means of a connection duct and that said connection duct can have a cross-sectional area (with respect to a section plane orthogonal to a central axis thereof along which the central axis extends from the second chamber to the third chamber) smaller than the cross-sectional area of said passage duct (with respect to a section plane orthogonal to a central axis of the passage duct), for example optionally said cross-sectional area of the connection duct can be equal to 0.4 times to 0.6 times said cross-sectional area of the passage duct, for example it is optionally possible to provide that said cross-sectional area of the connection duct can be substantially about half of the cross-sectional area of said passage duct of the coupling sleeve.

The invention may further make available a pump, for example a positive displacement pump, provided with a valve assembly according to one or more of, for example all, the aspects described above.

Another aspect of the invention provides that said pump may comprise:
- a pump body, defining one or more cylinders, and a head, fixed to the pump body and adapted to close one end of each cylinder, a reciprocating piston being slidably received inside each cylinder,
- an intake manifold adapted to be connected to a source of fluid to be pumped,
- a delivery manifold adapted to be connected to a pumped fluid dispensing device,
- a drive motor of said one or more reciprocating pistons,
- the valve assembly being connected (e.g. by means of said inlet duct) to the delivery manifold to receive the fluid (i.e. the liquid) therefrom.

### BRIEF DESCRIPTION OF THE DRAWINGS

Further features and advantages of the invention will be more apparent after reading the following description provided by way of a non-limiting example, with the aid of the figures illustrated in the accompanying drawings.

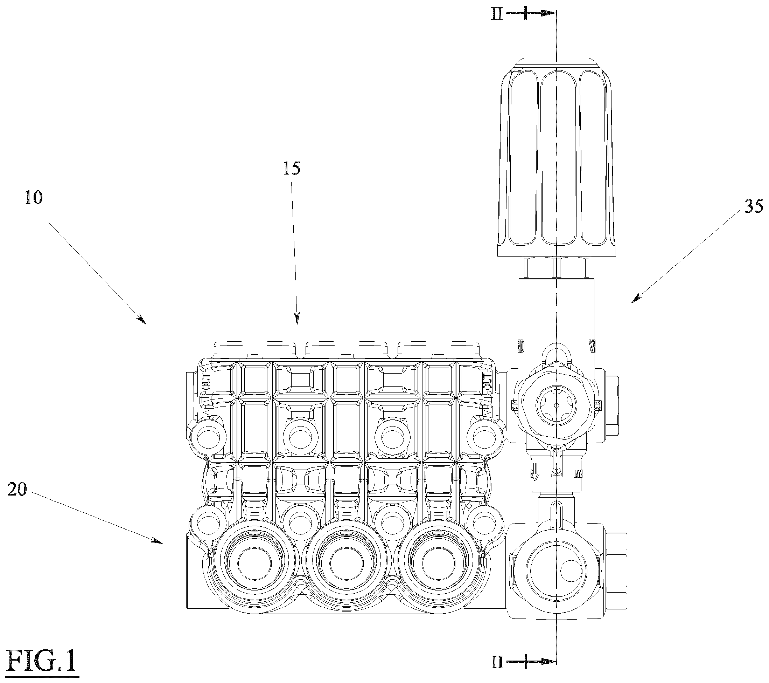

Figure 1 is a view of a pump provided with a valve assembly according to the invention.
Figure 2 is a sectional view along the trace II-II of figure 1 of the valve assembly with a first shutter body in the closed position.
Figure 3 is an enlarged view of a portion of figure 2.
Figure 4 is the sectional view along the trace II-II of figure 1 of the valve assembly with a first shutter body in the open position.
Figure 5 is an enlarged view of a portion of figure 2 in which a flow of fluid flowing from a second chamber into a coupling sleeve is schematized.

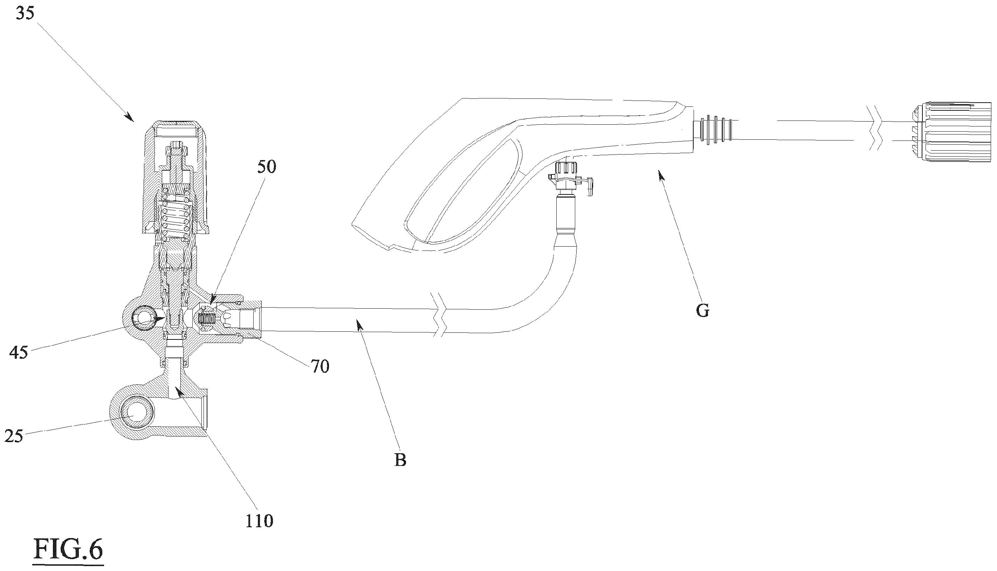

Figure 6 is a schematic view in which the cross-sectional area of the valve assembly of figure 4 with an outlet duct and a dispensing device connected to the valve assembly is visible.

### BEST MODE TO IMPLEMENT THE INVENTION

With particular reference to these figures, a pump, for example particularly a positive displacement piston pump 10 or a plunger pump, which can be installed for example on a pressure washer or on another machine or system for distributing or dispensing pressurized fluids (typically water), is indicated globally with reference 10.

The pump 10 comprises a pump body 15, defining one or more cylinders, and a head 20, fixed to the pump body 15 and adapted to close one end of each cylinder.

An alternative piston, which is adapted to define, together with the corresponding cylinder and the head 20, a respective variable volume compression chamber, is slidably received within each cylinder.

The pistons are kinematically connected to a single transmission shaft through respective kinematics, for example a crank-rod kinematics, which is adapted to transform the rotary movement of the transmission shaft into a reciprocating linear movement of the piston. The transmission shaft may be rotated by a drive motor, for example by an electric motor or alternatively by an internal combustion engine.

The cylinders, pistons, compression chambers, transmission shaft and drive motor are not illustrated or visible in the figures since they are known and conventional in themselves.

The pump 10 comprises an intake manifold 25 and a delivery manifold 30, both of which can be made in the head 20.

For example, each compression chamber may be connected to the intake manifold 25 through a respective intake valve and to the delivery manifold 30 through a respective delivery valve.

The intake and delivery valves can be automatic valves and are conventional in themselves.

The intake manifold 25 can be connected to a source of fluid to be pumped, for example to a tank containing the fluid or alternatively to a fluid supply network (for example the water network), while the delivery manifold 30 can be connected to a dispensing device G, for example to a dispensing gun or lance.

The dispensing device G can be provided with special valve members adapted to selectively open and close fluid dispensing following a manual operation.

A valve assembly, indicated globally by reference numeral 35, can be fluidly (e.g. hydraulically) interposed between the delivery manifold 30 and the dispensing device G.

The valve assembly 35 may first comprise a rigid (e.g. metallic) valve body 40 defining a space for receiving the fluid and for it to flow which arrives from the delivery manifold 30. The valve body 40 is substantially an internally hollow tubular body within which the fluid it receives from the delivery manifold is received and flows.

For example, the valve body 40 may be substantially defined by a tubular (multi-way, e.g. four-way) body (or joint) having an internal cavity within which the fluid is received and flows in the manners that will become clearer hereinafter.

The valve assembly 35 has a first chamber 45, for example defined in the valve body 40, which is adapted to be placed in fluid communication with an inlet duct A for receiving said fluid from the delivery manifold 30.

In particular, the first chamber 45 can be in constant hydraulic communication with the delivery manifold 30 via said inlet duct A which is for example fluidly (sealingly) connected to the valve body 40 (for example directly connected to a respective one of said ways thereof).

The first chamber 45 is thus adapted to receive the fluid arriving from the delivery manifold of the pump.

In the illustrated embodiment, the inlet duct A may coincide with an end section of the delivery manifold 30.

The valve assembly 35 further comprises a second chamber 50, for example defined in the valve body 40, which is in fluid (e.g. hydraulic) communication with the first chamber 45 via a first valve seat 55.

It is wished to specify that, within the scope of the present description, valve seat generically means any passage, opening or hole, of any shape and size, which is adapted to place two separate volumes in hydraulic communication and is adapted to be obstructed by a corresponding shutter body, to selectively prevent such communication.

Inside the second chamber 50 a first shutter body 60 is housed, which is movable between a closed position, in which it closes the first valve seat 55 preventing communication between the first chamber 45 and the second chamber 50, and an open position, in which it opens the first valve seat 55 allowing communication between said first chamber 45 and said second chamber 50.

The first shutter body 60 can be constantly pushed towards the closed position by a first resilient element 65, for example by a spring, which acts in contrast with the pressure of the fluid in the first chamber 45.

The second chamber 50 is adapted to be placed in fluid communication with an outlet duct B, which is adapted to be connected for example with the dispensing device G (to place the second chamber 50 in fluid communication with the dispensing device G), for example a dispensing lance or gun, for dispensing the fluid.

The valve assembly 35 also comprises a coupling sleeve 70 (or delivery sleeve), which is adapted to place the second chamber 50 in fluid communication with the outlet duct B. In particular, the coupling sleeve 70 is adapted to be interposed between said second chamber 50 and the outlet duct to place them in fluid communication.

The coupling sleeve 70 has an annular sleeve, that is, closed onto itself in a loop, around a central axis C that delimits an internal cavity 75 extending along said central axis C. The coupling sleeve 70 closes the second chamber 50 at one end.

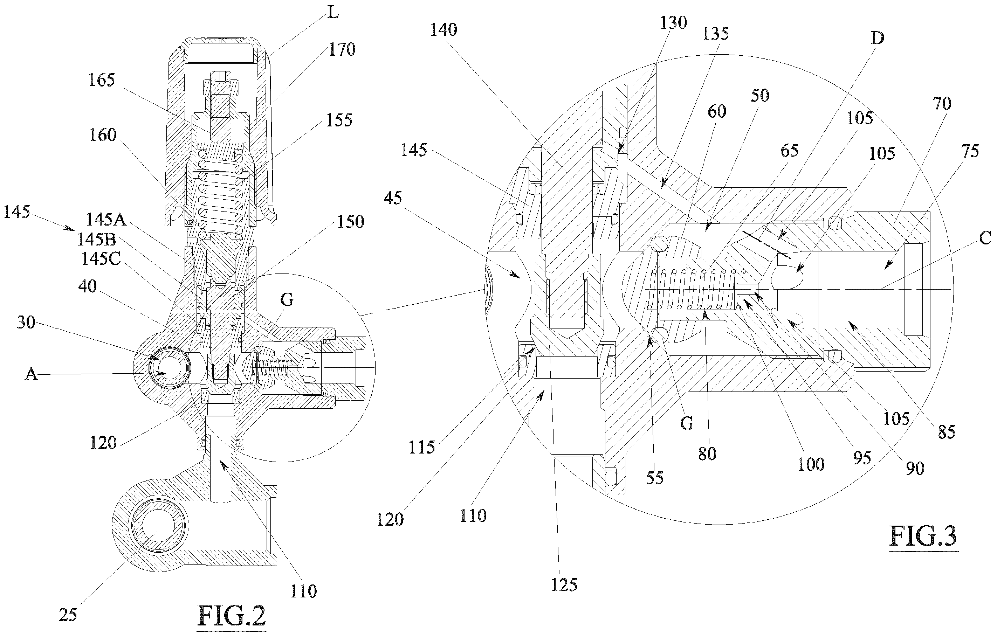

In particular, as better visible in figure 3, the coupling sleeve 70 can be rigidly fixed (for example screwed) to the valve body 40 (for example directly connected to a respective one of said ways thereof), at the second chamber 50.

In particular, as better visible in figure 3, the coupling sleeve 70 can have a first portion that extends inside the second chamber 50, and a second portion that (closes the second chamber 50 and) protrudes partially outside the valve body 40, to which the outlet duct B (and therefore the dispensing device G) is adapted to be fluidly connected in a sealing manner.

In detail, the internal cavity 75 of the coupling sleeve 70 can have along its extent with respect to said central axis C a first section 80 proximal to the first chamber 45, a second section 85 distal from the second chamber 50 and an intermediate section 90 between the first section 80 and the second section 85.

In particular, the coupling sleeve 70 may have a shoulder 95 facing radially towards the central axis C which defines an axial narrowing of the internal cavity 75 and which circumferentially delimits said intermediate section 90.

The intermediate section 90 can therefore have a cross-sectional area (with respect to a section plane orthogonal to the central axis C) smaller than the cross-sectional area of the second section 85 (with respect to a section plane orthogonal to the central axis C). In particular, the cross-sectional area of said second section 85 of the internal cavity 75 of the coupling sleeve 70 is 5 to 10 times the cross-sectional area of the intermediate section 90, for example preferably 7 to 8 times the cross-sectional area of the intermediate section 90.

Furthermore, the intermediate section 90 may have a cross-sectional area (with respect to said section plane orthogonal to the central axis C) smaller than the cross-sectional area of the first section 80 (with respect to a section plane orthogonal to the central axis C).

For example, the first section 80 may have a cross-sectional area (with respect to a section plane orthogonal to the central axis C) 3 to 5 times the cross-sectional area (with respect to a section plane orthogonal to the central axis C) of the intermediate section 90. Still, the first section 80 may have a cross-sectional area (with respect to a section plane orthogonal to the central axis C) smaller than the second section 85, for example about half of the cross-sectional area of the second section 85.

The first resilient element 65 is comprised (i.e. interposed) and compressed between the coupling sleeve 70 and the first shutter body 60, for example partially contained in the internal cavity 75 of the latter.

In particular, as better visible in the enlargement of figure 3, the first resilient element 65 (i.e. said spring) can be inserted within the first section 80 of the internal cavity 75 of the coupling sleeve 70 and placed in abutment on an abutment surface 100 made available by said axial narrowing of the coupling sleeve 70 that delimits the intermediate section 90 (i.e. made available by said shoulder 95 facing radially towards the central axis C of the coupling sleeve 70).

In addition, the first shutter body 60 can be fitted onto the coupling sleeve 70, and be movable along the same between the open and the closed position.

In particular, the first shutter body 60 can be fitted onto the coupling sleeve 70, so as to circumferentially embrace the same.

For example, as visible in figure 3, the first shutter body 60 is fitted onto said portion of the coupling sleeve 70 inserted (within the valve body 40, and in particular) in the second chamber 50, in particular fitted onto the coupling sleeve 60 at a portion thereof delimiting the first section 80 of the internal cavity 75.

More in detail, the first shutter body 60 can generally have the shape of a cup, the mouth of which is fitted onto the coupling sleeve 70 and slides in contact thereon during the movement between the closed position and the open position.

The internal cavity defined by the cup-shaped body of the first shutter body 60 is therefore in fluid communication with the internal cavity 75 of the coupling sleeve 75, in particular it opens directly onto the first section 80 of said internal cavity 75.

The first resilient element 65 (i.e. said spring) can therefore be contained in a housing seat defined overall by the first section 80 of the internal cavity 75 of the coupling sleeve 70 and said internal cavity of the first shutter body 60.

In each position assumed by the first shutter body 60 from the open position to the closed position (including the same) the shutter body is always at least partially fitted onto the coupling sleeve 70.

In other words, the first section 80 of the internal cavity 75 of the coupling sleeve 70 may never be directly open on the second chamber 50.

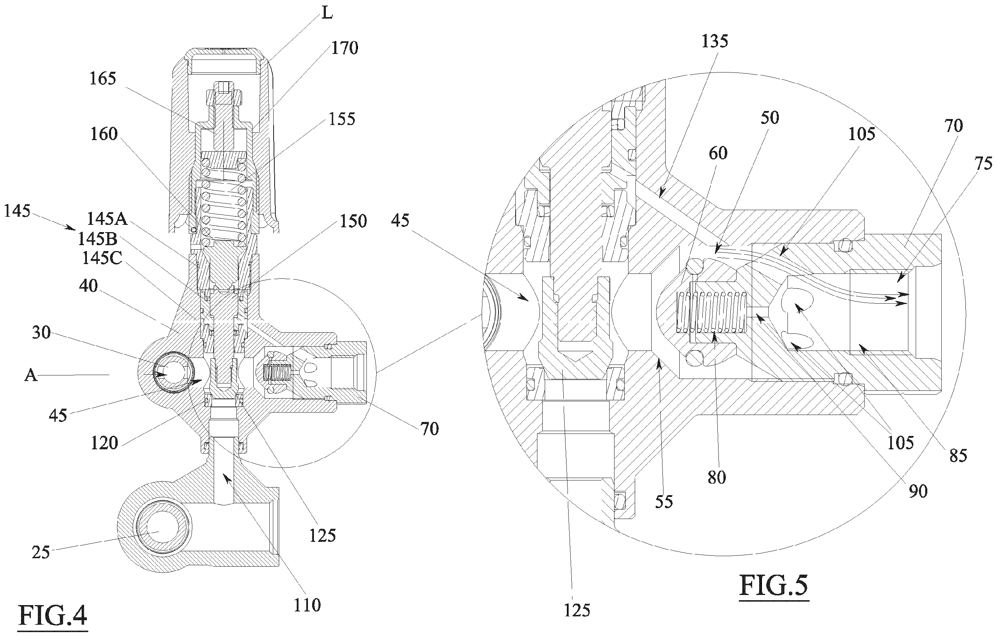

As visible in figures 3 and 5, a sealing gasket G, which is fitted onto the (cup-shaped) body of the first shutter body 60 and preferably partially inserted in an annular groove made thereon, can be associated with the first shutter body 60.

This sealing gasket G is in particular intended to ensure the fluidic seal when the first shutter body 60 is in the closed position.

The coupling sleeve 70, as mentioned above, is adapted to place the second chamber 50 in fluid communication with the outlet duct B.

According to the claimed invention, the coupling sleeve 70 comprises at least one passage duct 105, preferably a plurality of passage ducts (for example homologous to each other in shape and size), each of which makes available a path for the fluid from the second chamber 50 to the internal cavity 75 of the coupling sleeve 70 (towards the outlet duct B and for example the dispensing device G connected thereto).

Each passage duct 105 passes through the annular sleeve in a transverse direction with respect to the central axis C of the coupling sleeve 70.

In detail, each passage duct 105 flows at one end onto the second chamber 50 and at the opposite end onto the internal cavity 75 of the coupling sleeve 70.

In practice, each passage duct 105 has an open end on the second chamber 50 and the opposite open end on the internal cavity 75 of the coupling sleeve 70 (for example at the second section 85 thereof).

Each passage duct 105 has a central axis D inclined with respect to the central axis C of the coupling sleeve 70 by an angle of less than or equal to 45°, for example preferably less than or equal to 40°, for example substantially equal to 35°.

The passage ducts 105 of the plurality are preferably angularly equidistant from each other.

Each passage duct 105 has a cross-sectional area (with respect to a section plane orthogonal to said central axis D of the passage duct 105) equal to 2 to 3 times the cross-sectional area of the intermediate section 90 (with respect to a section plane orthogonal to the central axis C) of the internal cavity 75 of the coupling sleeve 70.

Preferably, the second chamber 50 is in fluid communication with the internal cavity 75 of the coupling sleeve 70 and therefore with the outlet duct B only through said passage duct 105 or said passage conduits 105 of the plurality.

In particular, the first shutter body 60 is devoid of passage ducts adapted to place the second chamber 50 in fluid communication with the internal cavity 75 of the coupling sleeve 70 and therefore with the outlet duct B.

In other words, the first shutter body 60 is devoid of passage ducts that open directly onto the second chamber 50.

The valve assembly 35 further comprises a discharge duct 110, which is in fluid communication with the first chamber 45 via a second valve seat 115.

The discharge duct 110 can be made (at least partially) in the same body in which the first chamber 45 is made, for example in the valve body 40.

Preferably, the discharge duct 110 is adapted to place the first chamber 45 in communication with the intake manifold 25 of the pump 10 (for example by means of a respective one of said ways of the shutter body 40 which is connected to the intake manifold 25). However, it is not excluded that, in other embodiments, the discharge duct 110 can place the first chamber 45 in communication with other low pressure volumes, for example with the tank of the liquid to be pumped.

For example, as better visible in figure 3, the second valve seat 115 can be made by a separate annular body 120 that is inserted within the first chamber 45, possibly with the interposition of special sealing gaskets and fixed within the valve body 40.

Within the first chamber 45 there is housed a second shutter body 125, which is movable between a closed position, in which it closes the second valve seat 115 preventing communication between the first chamber 45 and the discharge duct 110, and an open position, in which it opens the second valve seat 115, allowing such communication.

The valve assembly 35 further comprises a third chamber 130, separated from the first chamber 45 but in constant fluid (i.e. hydraulic) communication with the second chamber 50.

For example, the third chamber 130 and the second chamber 50 can be in communication via a connection duct 135 that can be obtained in the valve body 40 itself.

The connection duct 135, in particular, opens at one end onto the second chamber 50 and at the opposite end onto the third chamber 130.

This connection duct 135 may have a cross-sectional area (with respect to a section plane orthogonal to a central axis thereof) about half of the cross-sectional area (with respect to a section plane orthogonal to the central axis D) of each passage duct 135 obtained in the coupling sleeve 70.

The third chamber 130 is partially delimited by a sliding plunger 140, which is rigidly fixed to the second shutter body 125 so that the pressure of the fluid in the third chamber 130 tends to shift the second shutter body 125 towards the open position of the discharge duct 110.

More in detail, the plunger 140 can be slidably received inside a cylinder 145 inserted within the valve body 40 and rigidly fixed thereto (for example inserted in a respective one of said ways of the valve body 40 and fixed at the same), a bottom wall of which separates the first chamber 45 from the third chamber 130.

In this way, the third chamber 130 is actually delimited between the piston 140 and the cylinder 145.

In the illustrated example, the cylinder 145 is made in a separate body with respect to the body in which the first chamber 45 is made, in this case with respect to the valve body 40, and can be rigidly joined to the latter, for example, by means of a threaded connection and with interposition of special sealing gaskets.

In particular, said cylinder 145, as visible in the figure 2 or 3, can be made in several parts 145A, 145B, 145C which are then placed in abutment (and possibly fixed) to each other to make said cylinder 145 available as a whole.

However, it is not excluded that, in other embodiments, the cylinder 145 can be made in a single body with the valve body 40, as well as that it can be made in a single monolithic body.

The second shutter body 125 can be rigidly connected to the plunger 140 which slidably fits into a through hole obtained in the bottom wall of the cylinder 145, to which one or more gaskets are preferably associated ad which are adapted to ensure that the first chamber 45 and the third chamber 130 remain hermetically separated.

In particular, it is possible that the plunger 140 can be connected to the second shutter body 125 in a removable manner, for example by means of a threaded connection. The valve assembly 35 comprises a second resilient element 155, for example a spring, which is adapted to push the second shutter body 125 towards the closed position of the second valve seat 115 and therefore of the discharge duct 110.

In the illustrated example, this second resilient element 155 is positioned on the opposite side of the plunger 140 with respect to the second shutter body 125, and outside the third chamber 130.

In particular, the second resilient element 155 can be partially received in the cylinder 145 and be interposed between a first abutment element 160, associated with the plunger 140, and a second abutment element 165 rigidly connected to the cylinder 145.

The first abutment element 160 can be defined by a body inserted in the cylinder 145 coaxial to the plunger 140, and placed in abutment on the plunger itself, for example coupled to the plunger 140 by shape coupling.

The second abutment element 165, which can be shaped as a pin (for example coaxial to the plunger 140), can be rigidly fixed to a connection body 170, which can in turn be fixed on the cylinder 145, for example screwed thereto.

In detail, the second resilient element 155 as better visible in figure 2 lies on (i.e. is placed in abutment on) said second abutment element 65 by interposition of a plate.

More in detail, the second abutment element 165 can be coupled to the connection body 170 by means of a threaded connection, in such a way that, by screwing or unscrewing the second abutment element 165 with respect to the cover, it is possible to cause an axial displacement of the second abutment element in the sliding direction of the plunger 140, by varying the pre-compression of the second resilient element 155 and, therefore, the force with which the second shutter body 125 is pushed towards the closed position. The connection body 170 can in turn be coupled to an external protection cover L, for example by means of a coupling with male hexagon-female hexagon shape, such as to be integral in screwing/unscrewing thereto.

More in detail, the second shutter body 125 can generally have the shape of a cup, the mouth of which is fixed, for example screwed to the plunger 140.

The operation of the valve assembly 35 described above will be described below starting from the condition in which the drive motor of the pump 10 is turned off and the pump 10 is stopped.

In this condition, the first shutter body 60 and the second shutter body 125 are both in the respective closed position.

When the drive motor is started, the pistons of the pump 10 immediately starts pumping at least a small amount of fluid from the intake manifold 25 to the delivery manifold 30. As the motor rotation speeds increase, the flow rate of fluid being pumped into the first chamber 45 of the valve assembly 35 also increases.

At this point, the pumped fluid pushes the first shutter body 60 towards the open position, in contrast to the action of the first resilient element 65, thus flowing into the second chamber 50 and from here into the coupling sleeve 70 to reach the outlet duct B, for example towards the dispensing device G from which it exits.

In particular, as schematically illustrated in figure 5, with reference to the sectioned passage duct 105, the path for the fluid flowing from the second chamber 50 in the coupling sleeve 70 towards the outlet duct B is particularly smooth, i.e. substantially devoid of sudden bends.

During the dispensing of the fluid, part of the fluid that reaches the second chamber is filled, by means of the connection duct 135, into the third chamber 130.

Preferably, the preload of the second resilient element 155 can be regulated in such a way that, during the dispensing of the fluid (i.e. with the first shutter body in the open position) the pressure in the third chamber 130, by virtue of the greater area made available by the plunger 140 in the third chamber 130 than that made available by the same in the first chamber 45, is able to overcome the force exerted on the plunger 140 by the second resilient element 155 and by the pressure in the first chamber 45, so as to at least slightly move the second shutter body 125 away from the second valve seat 115 allowing a smaller part of the fluid pumped by the pump 10 to reach the discharge duct 110. When the dispensing of the fluid is terminated, for example the dispensing lance or gun is closed, the fluid, since it is not able to flow towards the outlet duct B, acts through the internal cavity 75 of the coupling sleeve 70, on the first shutter body 60 (helped by the first resilient element, i.e. the spring) so as to bring it into the closed position.

The particular conformation of the internal cavity 75 of the coupling sleeve 70, and in particular the narrowing defined by the intermediate section 90, results in a pressure drop allowing a gentle closure of the first shutter body 60, that is, it allows to eliminate or at least significantly attenuate the so-called water hammer.

In such a situation, i.e. when the dispensing of the fluid is terminated (for example when the dispensing device G is closed) the pressure in the second chamber 50 and in the third chamber 130 increases, increasing the thrust exerted on the plunger 140 in contrast to the second resilient element 155.

In response to this, the second shutter element 125 will move further away from the second valve seat 115 so that all the fluid pumped by the pump 10, flows through the discharge duct 110, for example towards the intake manifold 25.

The invention thus conceived is susceptible to many modifications and variants, all falling within the same inventive concept as defined by the appended claims.

Moreover, all details can be replaced by other technically equivalent elements.

In practice, the materials used, as well as the contingent shapes and sizes, can be whatever according to the requirements without for this reason departing from the scope of protection of the following claims.

## Claims

1. A valve assembly (35) for pumps (10) comprising:
- a first chamber (45) adapted to be placed in fluid communication with an inlet duct (A),
- a second chamber (50) communicating with the first chamber (45) via a first valve seat (55), the second chamber (50) being adapted to be placed in fluid communication with an outlet duct (B),
- a first shutter body (60) housed in the second chamber (50) and movable between a closed position, in which it closes the first valve seat (55), and an open position, in which it opens the first valve seat (55),
- a first resilient element (65) adapted to push the first shutter body (60) towards the closed position,
- a coupling sleeve (70) provided with a sleeve closed onto itself in a loop around a central axis (C) and delimiting an internal cavity (75) extending along said central axis (C), wherein the coupling sleeve (70) is adapted to place the second chamber (50) in fluid communication with the outlet duct, said first resilient element (65) being compressed between the coupling sleeve (70) and the first shutter body (60);
**characterised in that** the coupling sleeve (70) comprises at least one passage duct (105) passing through the sleeve in a transverse direction with respect to the central axis (C) thereof and flowing into the internal cavity (75) to place the second chamber (50) in communication with the internal cavity (75) to place the second chamber (50) in fluidic communication with the outlet duct (B).

2. The valve assembly (35) according to claim 1, wherein the first shutter body (60) is devoid of passage ducts adapted to place the second chamber (50) in fluid communication with the outlet duct (B).

3. The valve assembly (35) according to claim 1, wherein said coupling sleeve (70) has a plurality of passage ducts (105) each of which is adapted to place the second chamber (50) in fluid communication with the outlet duct (B).

4. The valve assembly (35) according to claim 1, wherein the internal cavity (75) of the coupling sleeve (70) has along the central axis (C) thereof a first section (80) proximal to the second chamber (50), within which the first resilient element (65) is partially inserted, a second section (85) distal from the second chamber (50) and an intermediate section (90) between the first section (80) and the second section (85) having a smaller cross-sectional area than the cross-sectional area of the second section (85).

5. The valve assembly (35) according to the preceding claim, wherein the coupling sleeve (70) has an axial narrowing which delimits said intermediate section (90) of the internal cavity (75) and which makes available an abutment surface (100) for said first resilient element (65).

6. The valve assembly (35) according to claim 1 or 2, wherein said passage duct (105) has a central axis inclined with respect to the central axis (C) of the coupling sleeve (70) by an angle of less than or equal to 45°.

7. The valve assembly (35) according to claim 1, wherein said first resilient element (65) is at least partially inserted within the internal cavity (75) of the coupling sleeve (70).

8. The valve assembly (35) according to the claim 4, wherein the cross-sectional area of said second section (85) of the internal cavity (75) of the coupling sleeve (70) is 5 to 10 times the cross-sectional area defined by the intermediate section (90).

9. The valve assembly (35) according to claim 4, wherein said passage duct (105) has a cross-sectional area equal to 2 to 3 times the cross-sectional area of the intermediate section (90) of the internal cavity (75) of the coupling sleeve (70).

10. The valve assembly (35) according to claim 1, wherein the first shutter body (60) is fitted onto the coupling sleeve (70) and movable along the same between the open and closed position.

11. The valve assembly (35) according to claim 1, further comprising:
- a discharge duct (110) communicating with the first chamber (45) via a second valve seat (115),
- a third chamber (130) defined in the valve body (40) communicating with the second chamber (50) and partially delimited by a sliding plunger (140) inserted into the valve body (40),
- a second shutter body (125) rigidly connected to the plunger (140) and housed in the first chamber (45) where it is movable between a closed position, in which it closes the second valve seat (115), and an open position, in which it opens the second valve seat (115), and
- a second resilient element (155) adapted to push the second shutter body (125) towards the closed position in contrast to the pressure present in the third chamber (130).

## Patentansprüche

1. Ventilanordnung (35) für Pumpen (10), umfassend:
- eine erste Kammer (45), die angepasst ist, um mit einem Einlasskanal (A) in Fluidverbindung gebracht zu werden,
- eine zweite Kammer (50), die über einen ersten Ventilsitz (55) mit der ersten Kammer (45) in Verbindung ist, wobei die zweite Kammer (50) angepasst ist, um mit einem Auslasskanal (B) in Fluidverbindung gebracht zu werden,
- einen ersten Verschlusskörper (60), der in der zweiten Kammer (50) untergebracht und zwischen einer geschlossenen Stellung, in der er den ersten Ventilsitz (55) verschließt, und einer offenen Stellung, in der er den ersten Ventilsitz (55) öffnet, bewegbar ist,
- ein erstes elastisches Element (65), das angepasst ist, um den ersten Verschlusskörper (60) in die geschlossene Stellung zu drücken,
- eine Kupplungshülse (70), die mit einer Hülse versehen ist, die in sich selbst in einer Schleife um eine mittlere Achse (C) geschlossen ist und einen inneren Hohlraum (75) begrenzt, der sich entlang der mittleren Achse (C) erstreckt, wobei die Kupplungshülse (70) angepasst ist, um die zweite Kammer (50) mit dem Auslasskanal in Fluidverbindung zu bringen, das erste elastische Element (65) zwischen der Kupplungshülse (70) und dem ersten Verschlusskörper (60) zusammengedrückt wird;
**dadurch gekennzeichnet, dass** die Kupplungshülse (70) mindestens einen Durchgangskanal (105) umfasst, der in Querrichtung in Bezug auf die Mittelachse (C) durch die Hülse verläuft und in den inneren Hohlraum (75) mündet, um die zweite Kammer (50) mit dem inneren Hohlraum (75) in Verbindung zu bringen, um die zweite Kammer (50) mit dem Auslasskanal (B) in Fluidverbindung zu bringen.

2. Ventilanordnung (35) nach Anspruch 1, wobei der erste Verschlusskörper (60) frei von Durchgangskanälen ist, die angepasst sind, um die zweite Kammer (50) mit dem Auslasskanal (B) in Fluidverbindung zu bringen.

3. Ventilanordnung (35) nach Anspruch 1, **dadurch gekennzeichnet, dass** die Kupplungshülse (70) eine Vielzahl von Durchgangskanälen (105) aufweist, wovon jeder geeignet ist, um die zweite Kammer (50) mit dem Auslasskanal (B) in Fluidverbindung zu bringen.

4. Ventilanordnung (35) nach Anspruch 1, wobei der innere Hohlraum (75) der Kupplungshülse (70) entlang der Mittelachse (C) davon einen ersten Abschnitt (80) proximal zu der zweiten Kammer (50), in den das erste elastische Element (65) teilweise eingesetzt ist, einen zweiten Abschnitt (85) distal zu der zweiten Kammer (50) und einen Zwischenabschnitt (90) zwischen dem ersten Abschnitt (80) und dem zweiten Abschnitt (85), der eine kleinere Querschnittsfläche als die Querschnittsfläche des zweiten Abschnitts (85) aufweist, aufweist.

5. Ventilanordnung (35) nach dem vorherigen Anspruch, wobei die Kupplungshülse (70) eine axiale Verengung aufweist, die den Zwischenabschnitt (90) des inneren Hohlraums (75) begrenzt und die eine Anlagefläche (100) für das erste elastische Element (65) verfügbar macht.

6. Ventilanordnung (35) nach Anspruch 1 oder 2, wobei der Durchgangskanal (105) eine Mittelachse aufweist, die in Bezug auf die Mittelachse (C) der Kupplungshülse (70) um einen Winkel von weniger als oder gleich wie 45° geneigt ist.

7. Ventilanordnung (35) nach Anspruch 1, wobei das erste elastische Element (65) zumindest teilweise in den inneren Hohlraum (75) der Kupplungshülse (70) eingesetzt ist.

8. Ventilanordnung (35) nach Anspruch 4, wobei die Querschnittsfläche des zweiten Abschnitts (85) des inneren Hohlraums (75) der Kupplungshülse (70) das 5- bis 10-fache der Querschnittsfläche ist, die durch den Zwischenabschnitt (90) definiert ist.

9. Ventilanordnung (35) nach Anspruch 4, wobei der Durchgangskanal (105) eine Querschnittsfläche aufweist, die gleich wie das 2- bis 3-fache der Querschnittsfläche des Zwischenabschnitts (90) des inneren Hohlraums (75) der Kupplungshülse (70) ist.

10. Ventilanordnung (35) nach Anspruch 1, wobei der erste Verschlusskörper (60) auf die Kupplungshülse (70) aufgesteckt und entlang derselben zwischen der offenen und der geschlossenen Stellung bewegbar ist.

11. Ventilanordnung (35) nach Anspruch 1, ferner umfassend:
- einen Auslasskanal (110), der über einen zweiten Ventilsitz (115) mit der ersten Kammer (45) in Verbindung ist,
- eine dritte Kammer (130), die in dem Ventilkörper (40) definiert ist und mit der zweiten Kammer (50) in Verbindung ist und teilweise durch einen Gleitkolben (140) begrenzt ist, der in den Ventilkörper (40) eingesetzt ist,
- einen zweiten Verschlusskörper (125), der starr mit dem Kolben (140) verbunden und in der ersten Kammer (45) untergebracht ist, wo er zwischen einer geschlossenen Stellung, in der er den zweiten Ventilsitz (115) schließt, und einer offenen Stellung, in der er den zweiten Ventilsitz (115) öffnet, bewegbar ist, und
- ein zweites elastisches Element (155), das angepasst ist, um den zweiten Verschlusskörper (125) gegen den Druck, der in der dritten Kammer (130) herrscht, in die geschlossene Stellung zu drücken.

## Revendications

1. Ensemble de soupape (35) pour pompes (10) comprenant :
- une première chambre (45) adaptée pour être mise en communication fluidique avec un conduit d'entrée (A),
- une deuxième chambre (50) en communication avec la première chambre (45) au moyen d'un premier siège de soupape (55), la deuxième chambre (50) étant adaptée pour être mise en communication fluidique avec un conduit de sortie (B),
- un premier corps d'obturateur (60) logé dans la deuxième chambre (50) et pouvant se déplacer entre une position fermée, dans laquelle il ferme le premier siège de soupape (55), et une position ouverte, dans laquelle il ouvre le premier siège de soupape (55),
- un premier élément élastique (65) adapté pour pousser le premier corps d'obturateur (60) vers la position fermée,
- un manchon d'accouplement (70) équipé d'un manchon refermé sur lui-même en formant une boucle autour d'un axe central (C) et délimitant une cavité interne (75) s'étendant le long dudit axe central (C), dans laquelle le manchon d'accouplement (70) est adapté pour mettre la deuxième chambre (50) en communication fluidique avec le conduit de sortie, ledit premier élément élastique (65) étant comprimé entre le manchon d'accouplement (70) et le premier corps d'obturateur (60) ;
**caractérisé en ce que** le manchon d'accouplement (70) comprend au moins un conduit de passage (105) qui traverse le manchon dans une direction transversale par rapport à son axe central (C) et débouche dans la cavité interne (75) afin de mettre la deuxième chambre (50) en communication avec la cavité interne (75) afin de mettre la deuxième chambre (50) en communication fluidique avec le conduit de sortie (B).

2. Ensemble de soupape (35) selon la revendication 1, dans lequel le premier corps d'obturateur (60) est dépourvu de canaux de passage adaptés pour mettre la deuxième chambre (50) en communication fluidique avec le conduit de sortie (B).

3. Ensemble de soupape (35) selon la revendication 1, dans lequel ledit manchon d'accouplement (70) comprend une pluralité de conduits de passage (105) dont chacun est adapté pour mettre la deuxième chambre (50) en communication fluidique avec le conduit de sortie (B).

4. Ensemble de soupape (35) selon la revendication 1, dans lequel la cavité interne (75) du manchon d'accouplement (70) comprend, le long de l'axe central (C), une première section (80) située à proximité de la deuxième chambre (50), dans laquelle le premier élément élastique (65) est partiellement inséré, une deuxième section (85) située à distance de la deuxième chambre (50) et une section intermédiaire (90) entre la première section (80) et la deuxième section (85) qui comprend une section transversale plus petite que celle de la deuxième section (85).

5. Ensemble de soupape (35) selon la revendication précédente, dans lequel le manchon d'accouplement (70) présente un rétrécissement axial qui délimite ladite section intermédiaire (90) de la cavité interne (75) et qui offre une surface d'appui (100) pour ledit premier élément élastique (65).

6. Ensemble de soupape (35) selon la revendication 1 ou 2, dans lequel ledit conduit de passage (105) présente un axe central incliné par rapport à l'axe central (C) du manchon d'accouplement (70) d'un angle inférieur ou égal à 45°.

7. Ensemble de soupape (35) selon la revendication 1, dans lequel ledit premier élément élastique (65) est au moins en partie inséré dans la cavité interne (75) du manchon d'accouplement (70).

8. Ensemble de soupape (35) selon la revendication 4, dans lequel la section transversale de ladite deuxième partie (85) de la cavité interne (75) du manchon d'accouplement (70) est 5 à 10 fois la section transversale définie par la partie intermédiaire (90).

9. Ensemble de soupape (35) selon la revendication 4, dans lequel ledit conduit de passage (105) présente une section transversale égale à 2 à 3 fois la section transversale de la partie intermédiaire (90) de la cavité interne (75) du manchon d'accouplement (70).

10. Ensemble de soupape (35) selon la revendication 1, dans lequel le premier corps d'obturateur (60) est monté sur le manchon d'accouplement (70) et peut se déplacer le long de celui-ci entre les positions ouverte et fermée.

11. Ensemble de soupape (35) selon la revendication 1, comprenant en outre :
- un conduit d'évacuation (110) en communication avec la première chambre (45) au moyen d'un deuxième siège de soupape (115),
- une troisième chambre (130) formée dans le corps de soupape (40), en communication avec la deuxième chambre (50) et en partie délimitée par un piston coulissant (140) inséré dans le corps de soupape (40),
- un deuxième corps d'obturateur (125) relié de manière rigide au piston (140) et logé dans la première chambre (45), où il peut se déplacer entre une position fermée, dans laquelle il ferme le deuxième siège de soupape (115), et une position ouverte, dans laquelle il ouvre le deuxième siège de soupape (115), et
- un deuxième élément élastique (155) adapté pour pousser le deuxième corps d'obturateur (125) vers la position fermée, en opposition à la pression exercée dans la troisième chambre (130).
